# FASCICULE DE BREVET EUROPEEN

(11) **EP 2 785 563 B1**
(45) Date de publication et mention de la délivrance du brevet: **22.03.2017**
(21) Numéro de dépôt: 12773040.6
(22) Date de dépôt: 14.09.2012
(51) Int. Cl.: B60R 7/02, B60R 13/01

(54) **AGENCEMENT D'UNE GARNITURE LATÉRALE DE COFFRE**
ANORDNUNG EINER LATERALEN AUSKLEIDUNG FÜR EINEN GEPÄCKRAUM
ARRANGEMENT OF A LATERAL LINER FOR A LUGGAGE COMPARTMENT

(30) Priorité: 29.11.2011 FR 1160920
(43) Date de publication de la demande: 08.10.2014
(73) Titulaire: Renault S.A.S., 92100 Boulogne-Billancourt (FR)
(72) Inventeur: JOSSE, Pascal, F-78500 Sartrouville (FR)
(86) Numéro de dépôt international: PCT/FR2012/052062
(87) Numéro de publication internationale: WO 2013/079834

(56) Documents cités:
- JP-A- 2006 151 196
- JP-A- 2008 201 164
- US-A- 6 073 984

## Description

L'invention concerne un agencement d'une garniture sur une paroi latérale de coffre de véhicule automobile comportant un relief correspondant à un passage de roue et, au-dessus du relief, un accoudoir fixé au moyen d'un support ainsi qu'un procédé de montage d'une telle garniture.

Un modèle de véhicule peut souvent être proposé en deux versions différentes. C'est le cas par exemple des véhicules proposant une configuration cinq places ou une configuration sept places. Dans ce cas, les parois latérales de coffre sont différentes selon la version considérée. En version cinq places, la paroi latérale présente principalement en partie basse un relief correspondant au passage de roue. En version sept places, la paroi latérale de coffre comporte non seulement le relief correspondant au passage de roue mais également un accoudoir, situé au-dessus du relief en partie basse.

Il est alors nécessaire de prévoir une garniture de paroi latérale spécifique pour chaque version de façon qu'elle s'adapte parfaitement à son environnement. Ainsi, dans la version cinq places, la garniture latérale présente une forme apte à épouser le relief en partie basse correspondant au passage de roue. Dans la version sept places, la garniture présente une forme complètement différente, avec un bossage destiné à recouvrir une partie du relief en partie basse ainsi qu'un pontet en tôle formant support de l'accoudoir.

Si ces garnitures permettent de proposer une solution adaptée à chaque version, elles présentent cependant l'inconvénient de multiplier le nombre de pièces différentes. La diversité est donc importante concernant les garnitures mais aussi concernant les parois latérales de coffre. Il est donc nécessaire de prévoir un outillage de fabrication de garnitures spécifique pour chaque version de véhicule, ce qui augmente considérablement les coûts. Document JP2006 151196 A, révèle un agencement d'une garniture selon le préambule de la revendication 1.

Afin de pallier ces inconvénients, l'invention a pour objet une garniture de paroi latérale de coffre qui permette son utilisation dans deux versions différentes de véhicule tout en ne nécessitant qu'un seul outillage.

L'invention a aussi pour objet une garniture dont l'agencement soit simple et robuste et qui offre une bonne qualité perçue.

A cet effet, l'invention propose un agencement d'une garniture du type cité ci-dessus, caractérisé en ce que la garniture comporte :
- dans une partie supérieure du bossage, au moins une découpe apte à laisser passer le support d'accoudoir,
et en ce que des bords de la découpe sont pris entre l'accoudoir et le support d'accoudoir.

Selon d'autres caractéristiques de l'agencement selon l'invention:
- L'agencement comporte en outre un élément de solidarisation de la garniture et du support d'accoudoir.
- L'élément de solidarisation est une patte disposée sur un bord supérieur de la découpe dont une extrémité est munie d'un trou apte à recevoir un organe de fixation.
- L'élément de solidarisation forme de plus un moyen de préhension apte à faciliter la fixation du support d'accoudoir sur la paroi latérale.

L'élément de solidarisation est dissimulé entre le support d'accoudoir et l'accoudoir.
- Le support d'accoudoir comporte sur sa partie supérieure des nervures transversales contre lesquelles un bord supérieur de l'ouverture vient en appui.

L'invention propose également deux propose également deux procédés de montage de la garniture selon l'invention :
- Procédé de montage d'une garniture selon l'invention dans lequel :
   - Dans une première étape, la garniture est fixée sur la paroi latérale
   - Dans une deuxième étape, le support d'accoudoir est inséré à travers la découpe et est fixé sur la paroi latérale
   - Dans une troisième étape, l'accoudoir est clippé sur le support, en prenant en sandwich le bord de la découpe entre l'accoudoir et le support.
- Procédé de montage d'une garniture selon l'invention dans lequel :
   - Dans une première étape, la garniture est fixée sur la paroi latérale
   - Dans une deuxième étape, l'élément de solidarisation est tiré vers le haut pour insérer le support à travers la découpe et fixer le support sur la paroi latérale
   - Dans une troisième étape, l'élément de solidarisation est fixé sur le support d'accoudoir.
   - Dans une quatrième étape, l'accoudoir est clippé sur le support, en prenant en sandwich le bord de la découpe entre l'accoudoir et le support.

D'autres caractéristiques et avantages de l'invention apparaîtront à la lecture de la description d'exemples de réalisation d'un agencement d'une garniture latérale de coffre en référence aux dessins annexés dans lesquels :
- La figure 1 est une vue en perspective d'une garniture latérale de coffre pour un véhicule d'une première version.
- La figure 2 est une vue en perspective d'une garniture latérale de coffre pour un véhicule d'une deuxième version.
- La figure 3 est une vue en perspective de ta garniture de la figure 2, dans une étape intermédiaire de montage.
- La figure 4 est une vue en perspective de la garniture de la figure 2, dans une étape finale de montage.

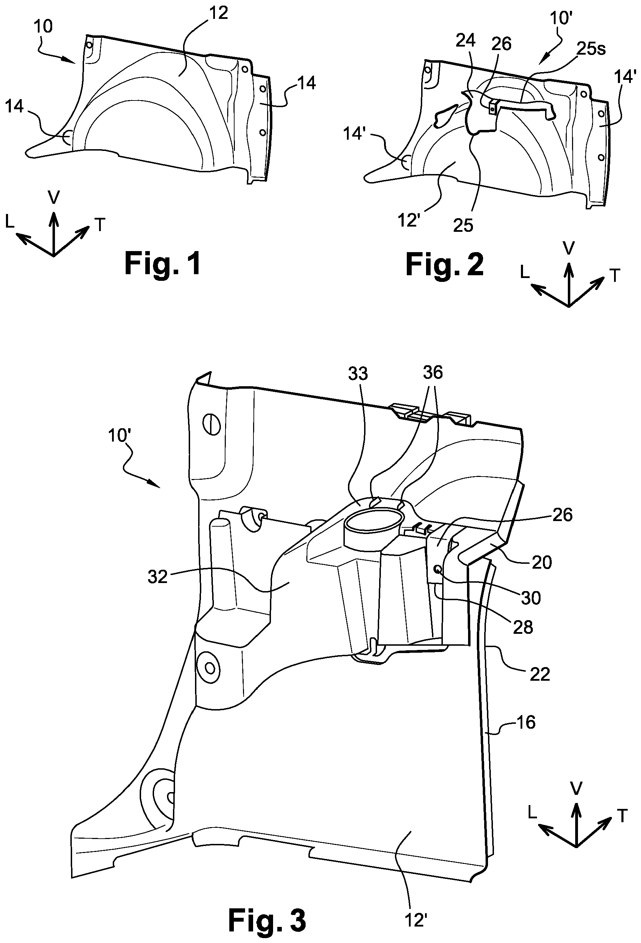

Dans la description qui suit, nous prendrons à titre non limitatif une orientation longitudinale, verticale et transversale indiquée par le trièdre L,V,T des figures 1 à 4. Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 1, un élément de garniture 10 est destiné à équiper une paroi latérale de coffre de véhicule (non représentée ici) correspondant à une première version dans laquelle le véhicule offre cinq places. Cet élément de garniture est constitué d'une moquette. Dans le cas d'une version de véhicule à cinq places, comme le coffre est destiné à ne recevoir qu'un chargement, la paroi latérale de coffre est nue, sans accessoire tel qu'un accoudoir, et ne comporte qu'un relief en partie basse correspondant à un passage de roue du véhicule.

La garniture 10 est alors destinée à épouser la forme de la paroi latérale et comporte à cette fin un bossage 12 en partie basse destiné à coopérer avec le relief en partie basse de la paroi latérale en version cinq places.

La garniture 10 est fixée directement sur la tôle de la paroi latérale au moyen de fixations coopérant avec des premiers orifices 14 ménagés dans la garniture 10 et des deuxièmes orifices prévus dans la paroi latérale de coffre.

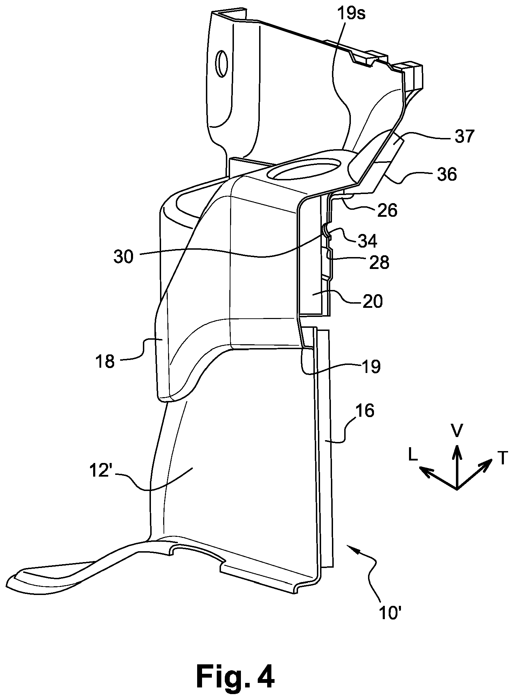

Tel que représenté à la figure 2, un élément de garniture 10' est destiné à équiper une paroi latérale 16 de coffre de véhicule (représentée aux figures 3 et 4) correspondant à une deuxième version dans laquelle le véhicule peut offrir sept places. Dans ce cas, comme le coffre est destiné à recevoir éventuellement une troisième rangée de sièges correspondant aux sixième et septième places, il est prévu sur la paroi latérale 16, tel que représenté aux figures 3 et 4, la présence d'un accoudoir 18 apte à être monté sur un support 20.

La paroi latérale 16, comme dans la version cinq places, comporte un relief 22 en partie basse correspondant au passage de roue, l'accoudoir 18 étant situé au-dessus du relief 22.

La garniture 10' comporte un bossage 12' identique au bossage 12 de la garniture 10 en version cinq places de la figure 1, le bossage 12' étant également apte à coopérer avec le relief 22 en partie basse de la paroi latérale 16. En partie supérieure du bossage 12', la garniture latérale 10' comporte de plus au moins une découpe 24 destinée à laisser passer le support d'accoudoir 20.

Ainsi, une fois la garniture 10' fixée sur la paroi latérale 16 au moyen de fixations (non représentées) de type clips plastiques aptes à coopérer avec des premiers orifices 14' ménagés dans la garniture 10' et des deuxièmes orifices (non représentés) prévus dans la paroi latérale 16, le support d'accoudoir 20 est inséré à travers la découpe 24 pour être fixé sur la paroi latérale 16 au moyen de pions ou de vis par exemple. Dans une dernière étape, l'accoudoir 18 est fixé sur le support 20 de façon que le bord périphérique 25 de la découpe 24 soit pris entre l'accoudoir 18 et le support 20.

Cependant, dans le cas où la garniture 10' est fabriquée dans une matière peu rigide qui n'est pas apte à transmettre des efforts, un bord longitudinal supérieur 25s de la découpe 24, lorsqu'une charge est appliquée sur l'accoudoir 18, risque de s'échapper de sa prise entre l'accoudoir 18 et le support 20. Ce phénomène présente bien évidemment un aspect négatif en termes de qualité perçue.

Pour remédier à cet inconvénient lié à l'utilisation d'une matière peu rigide pour la garniture 10', il est prévu un deuxième mode de réalisation dans lequel la garniture 10' comporte un élément. de solidarisation 26 du support d'accoudoir 20 et de la garniture 10'.

L'élément de solidarisation 26 est une patte formée sur le bord longitudinal supérieur 25s de la découpe 24. La patte 26, qui est issue de matière avec la garniture 10', s'étend selon une direction sensiblement perpendiculaire au bord 25s et comporte à son extrémité libre 28 un trou traversant 30.

L'extrémité 28 de la patte 26 est fixée sur une face latérale sensiblement verticale 32 du support d'accoudoir 20 à l'aide d'un clip coopérant avec le trou traversant 30 et un orifice 34 prévu dans la face latérale 32 du support 20. La patte 26 est suffisamment souple pour, en position fixée, épouser la forme du support 20 en présentant alors une forme de L, une première portion de la patte 26 s'étendant le long d'une face supérieure 33 sensiblement horizontale du support 20 et une deuxième portion s'étendant le long de la face latérale 32.

La patte 26 permet ainsi de solidariser la garniture 10' au support d'accoudoir 20.

La patte 26 constitue de plus lors du montage un moyen de préhension permettant également de faciliter la fixation du support 20 sur la paroi latérale 16, comme il sera explicité plus loin.

En outre, le support d'accoudoir 20 comporte, sur sa face horizontale supérieure 33, des nervures transversales 36 s'étendant sensiblement perpendiculairement au plan de la paroi 16. Le bord supérieur 25s de la découpe 24 peut venir en appui contre les extrémités des nervures 36.

Les nervures 36 servent à compresser localement la matière lors du montage ce qui permet de diminuer l'effort de montage de l'accoudoir 18.

Les nervures 36 servent également reprendre l'épaisseur d'une couche de feutre 37 située derrière la garniture 10'.

Les nervures 36 peuvent aussi être présentes dans le premier mode de réalisation de garniture décrit précédemment.

Le procédé de montage sur la paroi latérale 16 de la garniture 10' pourvue du moyen de solidarisation 26 est décrit ci-après.

Dans une première étape, la garniture 10' est fixée par un opérateur sur la paroi latérale 16.

Dans une deuxième étape, le support d'accoudoir 20 est inséré au travers de la découpe 24 et fixé sur la paroi latérale 16 au moyen de clips ou de vis par exemple. Pour faciliter l'insertion du support dans la découpe, l'opérateur saisit la patte 26 et la tire vers le haut de façon à relever le bord supérieur 25s de la découpe 24, rendant ainsi plus aisé le passage du support 20 à travers la découpe 24 mais permettant aussi un accès plus facile à l'orifice de fixation du support 20 sur la paroi latérale 16. Une fois le support 20 fixé, le bord 25s de la découpe 24 vient alors en appui contre les nervures 36.

Dans une troisième étape, l'opérateur fixe la patte 26 sur le support d'accoudoir 20 au moyen de la fixation, clip ou vis, coopérant avec le trou traversant 30 de la patte 26 et l'orifice 34 de la paroi latérale 32 du support 20.

Dans une quatrième étape, l'accoudoir 18 est fixé par clippage sur le support 20. La patte 26 est alors dissimulée par l'accoudoir 18 et le bord 25 de la découpe 24 est pris entre des bords 19 de l'accoudoir 18 et le support 20. Plus particulièrement, en partie supérieure, le bord 25s de la découpe 24 est pris entre les nervures 36 du support 20 et un bord supérieur 19s de l'accoudoir 18.

Les mouvements de la garniture 10' étant alors limités par l'effet de pincement et le moyen de solidarisation 26, il n'y a donc plus de risque de déchaussage intempestif de la garniture 10' lorsqu'un occupant vient en appui sur l'accoudoir 18.

De plus, lorsqu'un occupant appuie sur la garniture 10' au-dessus de l'accoudoir 18, il n'y a pas d'enfoncement de la garniture susceptible de donner une impression négative en matière de qualité perçue.

## Revendications

1. Agencement d'une garniture (10') sur une paroi latérale (16) de coffre de véhicule automobile comportant un relief (22) correspondant à un passage de roue et, au-dessus du relief (22), un accoudoir (18) fixé au moyen d'un support (20), et
- en partie basse, un bossage (12') destiné à épouser le relief (22) de la paroi latérale (16), **caractérisé en ce que** la garniture (10') comporte:
- dans une partie supérieure du bossage (12'), au moins une découpe (24) apte à laisser passer le support (20) d'accoudoir (18),
**et en ce que** des bords (25,25s) de la découpe (24) sont pris entre l'accoudoir (18) et le support (20) d'accoudoir (18).

2. Agencement d'une garniture (10') selon la revendication 1, **caractérisé en ce que** l'agencement comporte en outre un élément de solidarisation (26) de la garniture (10') et du support (20) d'accoudoir (18).

3. Agencement d'une garniture (10') selon la revendication précédente, **caractérisé en ce que** l'élément de solidarisation (26) est une patte disposée sur un bord supérieur (25s) de la découpe (24) dont une extrémité (28) est munie d'un trou (30) apte à recevoir un organe de fixation.

4. Agencement d'une garniture (10') selon l'une des revendications 2 ou 3, **caractérisé en ce que** l'élément de solidarisation (26) forme de plus un moyen de préhension apte à faciliter la fixation du support (20) d'accoudoir (18) sur la paroi (16).

5. Agencement d'une garniture (10') selon l'une des revendications 2 à 4, **caractérisé en ce que** l'élément de solidarisation (26) est dissimulé entre le support (20) d'accoudoir et l'accoudoir (18).

6. Agencement d'une garniture (10') selon l'une des revendications 1 à 5, **caractérisé en ce que** le support (20) d'accoudoir (18) comporte sur sa partie supérieure (32) des nervures transversales contre lesquelles un bord supérieur (25s) de l'ouverture (24) vient en appui.

7. Procédé de montage d'une garniture (10') selon la revendication 1, **caractérisé en ce que :**
- Dans une première étape, la garniture (10') est fixée sur la paroi latérale (16)
- Dans une deuxième étape, le support (20) d'accoudoir (18) est inséré à travers la découpe (24) et est fixé sur la paroi latérale (16)
- Dans une troisième étape, l'accoudoir (18) est clippé sur le support (20), en prenant en sandwich le bord (25,25s) de la découpe (24) entre l'accoudoir (18) et le support (20).

8. Procédé de montage d'une garniture (10') selon l'une des revendications 2 à 5 **caractérisé en ce que :**
- Dans une première étape, la garniture (10') est fixée sur la paroi latérale (16),
- Dans une deuxième étape, l'élément de solidarisation (26) est tiré vers le haut pour insérer le support (20) à travers la découpe (24) et fixer le support (20) sur la paroi latérale (16),
- Dans une troisième étape, l'élément de solidarisation (26) est fixé sur le support (20) d'accoudoir (18).
- Dans une quatrième étape, l'accoudoir (18) est clippé sur le support (20), en prenant en sandwich le bord (25, 25s) de la découpe (24) entre l'accoudoir (18) et le support (20).

## Patentansprüche

1. Anordnung einer Auskleidung (10') auf einer Seitenwand (16) eines Kraftfahrzeug-Kofferraums, die ein Relief (22), das einem Radkasten entspricht, und über dem Relief (22) eine Seitenlehne (18) aufweist, die mittels eines Trägers (20) befestigt wird, und
- im unteren Bereich eine Wölbung (12') aufweist, die dazu bestimmt ist, sich an das Relief (22) der Seitenwand (16) anzupassen,
**dadurch gekennzeichnet, dass** die Auskleidung (10') aufweist:
- in einem oberen Bereich der Wölbung (12') mindestens einen Ausschnitt (24), der den Träger (20) der Seitenlehne (18) durchlassen kann,
und dass Ränder (25,25s) des Ausschnitts (24) zwischen der Seitenlehne (18) und dem Träger (20) der Seitenlehne (18) gehalten werden.

2. Anordnung einer Auskleidung (10') nach Anspruch 1, **dadurch gekennzeichnet, dass** die Anordnung außerdem ein Element (26) zur festen Verbindung der Auskleidung (10') und des Trägers (20) der Seitenlehne (18) aufweist.

3. Anordnung einer Auskleidung (10') nach dem vorhergehenden Anspruch, **dadurch gekennzeichnet, dass** das Festverbindungselement (26) eine Lasche ist, die auf einem oberen Rand (25s) des Ausschnitts (24) angeordnet ist, von der ein Ende (28) mit einem Loch (30) versehen ist, das ein Befestigungsorgan aufnehmen kann.

4. Anordnung einer Auskleidung (10') nach einem der Ansprüche 2 oder 3, **dadurch gekennzeichnet, dass** das Festverbindungselement (26) außerdem eine Greifeinrichtung bildet, die die Befestigung des Trägers (20) der Seitenlehne (18) an der Wand (16) vereinfachen kann.

5. Anordnung einer Auskleidung (10') nach einem der Ansprüche 2 bis 4, **dadurch gekennzeichnet, dass** das Festverbindungselement (26) zwischen dem Seitenlehnenträger (20) und der Seitenlehne (18) versteckt ist.

6. Anordnung einer Auskleidung (10') nach einem der Ansprüche 1 bis 5, **dadurch gekennzeichnet, dass** der Träger (20) der Seitenlehne (18) in seinem unteren Bereich (32) Querrippen aufweist, gegen die ein oberer Rand (25s) der Öffnung (24) in Auflage kommt.

7. Montageverfahren einer Auskleidung (10') nach Anspruch 1, **dadurch gekennzeichnet, dass**:
- in einem ersten Schritt die Auskleidung (10') an der Seitenwand (16) befestigt wird,
- in einem zweiten Schritt der Träger (20) der Seitenlehne (18) durch den Ausschnitt (24) hindurch eingeführt und an der Seitenwand (16) befestigt wird,
- in einem dritten Schritt die Seitenlehne (18) auf den Träger (20) eingeklinkt wird, indem der Rand (25,25s) des Ausschnitts (24) zwischen der Seitenlehne (18) und dem Träger (20) sandwichartig gehalten wird.

8. Montageverfahren einer Auskleidung (10') nach einem der Ansprüche 2 bis 5, **dadurch gekennzeichnet, dass**:
- in einem ersten Schritt die Auskleidung (10') an der Seitenwand (16) befestigt wird,
- in einem zweiten Schritt das Festverbindungselement (26) nach oben gezogen wird, um den Träger (20) durch den Ausschnitt (24) hindurch einzuführen und den Träger (20) an der Seitenwand (16) zu befestigen,
- in einem dritten Schritt das Festverbindungselement (26) am Träger (20) der Seitenlehne (18) befestigt wird,
- in einem vierten Schritt die Seitenlehne (18) auf den Träger (20) eingeklinkt wird, indem der Rand (25,25s) des Ausschnitts (24) zwischen der Seitenlehne (18) und dem Träger (20) sandwichartig gehalten wird.

## Claims

1. Arrangement of a liner (10') on a lateral wall (16) of a motor vehicle luggage compartment, comprising a relief (22) corresponding to a wheel arch, and, above the relief (22), an armrest (18) which is secured by means of a support (20), and
- in the low part, a boss (12') which is designed to match the relief (22) of the lateral wall (16),
**characterized in that** the liner (10') comprises:
- in an upper part of the boss (12'), at least one cut-out (24) which can allow the armrest (18) support (20) to pass through,
and **in that** edges (25, 25s) of the cut-out (24) are held between the armrest (18) and the armrest (18) support (20).

2. Arrangement of a liner (10') according to Claim 1, **characterized in that** the arrangement additionally comprises an element (26) for rendering the liner (10') and the armrest (18) support (20) integral.

3. Arrangement of a liner (10') according to the preceding claim, **characterized in that** the element (26) for rendering integral is a lug placed on an upper edge (25s) of the cut-out (24), an end (28) of which is provided with a hole (30) which can receive a securing unit.

4. Arrangement of a liner (10') according to either of Claims 2 and 3, **characterized in that** the element (26) for rendering integral additionally forms a grasping means which can facilitate the securing of the armrest (18) support (20) on the wall (16).

5. Arrangement of a liner (10') according to one of Claims 2 to 4, **characterized in that** the element (26) for rendering integral is concealed between the armrest support (20) and the armrest (18).

6. Arrangement of a liner (10') according to one of Claims 1 to 5, **characterized in that** the armrest (18) support (20) comprises on its upper part (32) transverse ribs against which an upper edge (25s) of the opening (24) is supported.

7. Method for fitting a liner (10') according to Claim 1, **characterized in that**:
- in a first step, the liner (10') is secured on the lateral wall (16);
- in a second step, the armrest (18) support (20) is inserted through the cut-out (24), and is secured on the lateral wall (16);
- in a third step, the armrest (18) is clipped onto the support (20), sandwiching the edge (25, 25s) of the cut-out (24) between the armrest (18) and the support (20).

8. Method for fitting a liner (10') according to one of Claims 2 to 5, **characterized in that**:
- in a first step, the liner (10') is secured on the lateral wall (16);
- in a second step, the element (26) for rendering integral is drawn upwards in order to insert the support (20) through the cut-out (24) and secure the support (20) on the lateral wall (16);
- in a third step, the element (26) for rendering integral is secured on the armrest (18) support (20) ;
- in a fourth step, the armrest (18) is clipped onto the support (20), sandwiching the edge (25, 25s) of the cut-out (24) between the armrest (18) and the support (20).
